# FASCICULE DE BREVET EUROPEEN

(11) **EP 1 567 301 B1**
(45) Date de publication et mention de la délivrance du brevet: **17.09.2008**
(21) Numéro de dépôt: 03786010.3
(22) Date de dépôt: 17.11.2003
(51) Int. Cl.: B23K 26/02, B23K 26/20, B23K 26/38

(54) **SYSTEME ET PROCEDE POUR DEPLACER UN POINT DE FOCALISATION D'UN RAYONNEMENT LASER DE PUISSANCE**
VORRICHTUNG UND VERFAHREN ZUM BEWEGEN DES FOKUSPUNKTES EINES HOCHENERGIESTRAHLES
SYSTEM AND METHOD FOR MOVING A HIGH-POWER LASER BEAM FOCUS POINT

(30) Priorité: 18.11.2002 FR 0214398
(43) Date de publication de la demande: 31.08.2005
(73) Titulaire: Le Controle Industriel, Villebon sur Yvette, 91953 Courtaboeuf Cédex (FR)
(72) Inventeur: ROUAUD, Charles, 92310 SEVRES (FR); GAUSSON, Christophe, 91920 PALAISEAU (FR); DANG, Tat Thanh, 92160 ANTONY (FR)
(74) Mandataire: Blot, Philippe Robert Emile
(86) Numéro de dépôt international: PCT/FR2003/003403
(87) Numéro de publication internationale: WO 2004/045798

(56) Documents cités:
- WO-A-03/035318
- JP-A- 59 141 392
- US-A- 3 689 159
- US-A- 4 673 795
- US-A- 4 896 944
- US-A- 4 997 250
- US-A- 5 059 759
- US-A- 5 084 783
- US-A- 5 667 707
- PATENT ABSTRACTS OF JAPAN vol. 2000, no. 06, 22 septembre 2000 (2000-09-22) & JP 2000 071089 A (SUMITOMO HEAVY IND LTD), 7 mars 2000 (2000-03-07)

## Description

L'invention concerne un système et un procédé pour déplacer un point de focalisation d'un rayonnement laser de puissance le long d'une trajectoire présente sur la surface d'un objet à traiter conformément au préambule des revendications 1 et 11 (voir, par example JP 59/141 392 A).

Les systèmes connus de ce type comportent au moins :
- un dispositif de collimation du rayonnement laser, et
- un dispositif de focalisation du rayonnement laser collimaté sur le point de focalisation.

Dans les systèmes connus, il est admis que les axes du dispositif de focalisation et du dispositif de collimation doivent être confondus. Par conséquent, dans les systèmes connus, le dispositif de focalisation et le dispositif de collimation sont rigidement fixés à un même châssis mobile de manière à maintenir un alignement constant entre les deux dispositifs. Dès lors, pour déplacer le point de focalisation créé par le dispositif de focalisation le long d'une trajectoire présente sur la surface d'un objet à traiter, il est nécessaire de déplacer le châssis sur lequel sont fixés les dispositifs de collimation et de focalisation. Dans le cas où le rayonnement laser de puissance est utilisé pour souder entre elles des plaques métalliques, le poids d'un tel châssis mobile varie de 7 à 10 kg. En effet, en plus des dispositifs de collimation et de focalisation, le châssis est également utilisé pour fixer d'autres éléments tels que des buses de soufflage de gaz inerte, des moyens de guidage de fil d'apport ou autres.

Classiquement, la position de ce châssis mobile est asservie à celle de la trajectoire à suivre sur l'objet. Toutefois, bien que la position de ce châssis mobile soit asservie sur la trajectoire à suivre, des écarts importants, de l'ordre de 0,5 à 1 mm, sont relevés entre la position réelle du point de focalisation et la trajectoire à suivre lorsque cette trajectoire présente des angles. Par exemple, si la trajectoire est rectiligne sur quelques centimètres, puis tourne à angle droit en décrivant un quart de cercle dont le rayon de courbure est compris entre 20 et 50 mm, un écart maximum de 0,7 mm entre la position du point de focalisation et la trajectoire à suivre est fréquemment observé. En effet, la précision de l'asservissement est limitée par l'énergie cinétique du châssis mobile. Il a été proposé de réduire cet écart en limitant la vitesse de déplacement du châssis mobile, mais une telle mesure est contre-productive. Une autre solution consisterait à utiliser un actionneur plus puissant pour commander les déplacements du châssis mobile. Toutefois, cet actionneur est généralement monté à l'extrémité d'un bras articulé d'un robot propre à déplacer l'actionneur le long d'une trajectoire approximative pré-enregistrée, l'actionneur ne déplaçant le châssis mobile que pour compenser les écarts entre cette trajectoire pré-enregistrée et la trajectoire présente sur la surface de l'objet à traiter. Le poids de cet actionneur, puisqu'il est lui-même transporté par le bras du robot, ne peut pas être augmenté. La puissance de cet actionneur ne peut donc pas être accrue de façon inconsidérée sans pénaliser les performances du systèmes par ailleurs. On comprend donc qu'à cause de la puissance limitée de l'actionneur, les écarts observés sont provoqués par l'incapacité de cet actionneur à compenser efficacement l'énergie cinétique du châssis mobile.

Des dispositifs de déplacement d'une lentille de focalisation par rapport à un dispositif de collimation sont décrits dans US 4 997 150, US 4 896 944, US 5 059 759 et US 5 667 707.

L'invention vise à remédier à cet inconvénient en proposant un système dans lequel les écarts observés entre la trajectoire effectivement suivie par le point de focalisation et la trajectoire à suivre sur la surface de l'objet à traiter sont limités.

L'invention a donc pour objet un système conforme à la revendication 1 pour déplacer un point de focalisation d'un rayonnement laser de puissance le long d'une trajectoire. présente sur la surface d'un objet à traiter.

Dans le système ci-dessus, ce n'est plus l'ensemble formé par le dispositif de focalisation et le dispositif de collimation qui est déplacé, mais seulement le dispositif de focalisation. Par conséquent, il n'est plus nécessaire de monter le dispositif de collimation sur le châssis mobile, et le poids du châssis mobile s'en trouve allégé. Par conséquent, les erreurs d'asservissement dues à l'énergie cinétique de ce châssis mobile sont réduites sans pour autant qu'il soit nécessaire de limiter la vitesse de déplacement du châssis mobile ou d'utiliser un actionneur plus puissant.

D'autres caractéristiques du système conforme à l'invention apparaissent dans les revendications dépendantes. et

L'invention a également pour objet un procédé conforme à la revendication II pour déplacer un point de focalisation d'un rayonnement laser de puissance le long d'une trajectoire présente sur la surface d'un objet.

D'autres caractéristiques d'un procédé conforme à l'invention apparaissent dans les revendications dépendantes.

L'invention sera mieux comprise à la lecture de la description qui va suivre, donnée uniquement à titre d'exemple, et faite en se référant aux dessins sur lesquels :
- la figure 1 est une illustration schématique d'un système pour déplacer un point de focalisation d'un rayonnement laser de puissance conforme à l'invention ;
- la figure 2 est une vue agrandie d'une portion d'un dispositif de déplacement mis en oeuvre dans le système de la figure 1 ;
- la figure 3 est un organigramme d'un procédé pour déplacer un point de focalisation d'un rayonnement laser de puissance conforme à l'invention ; et
- la figure 4 est une illustration schématique de trajectoires suivies par un point de focalisation, obtenues à l'aide d'un système connu et d'un système conforme à l'invention.

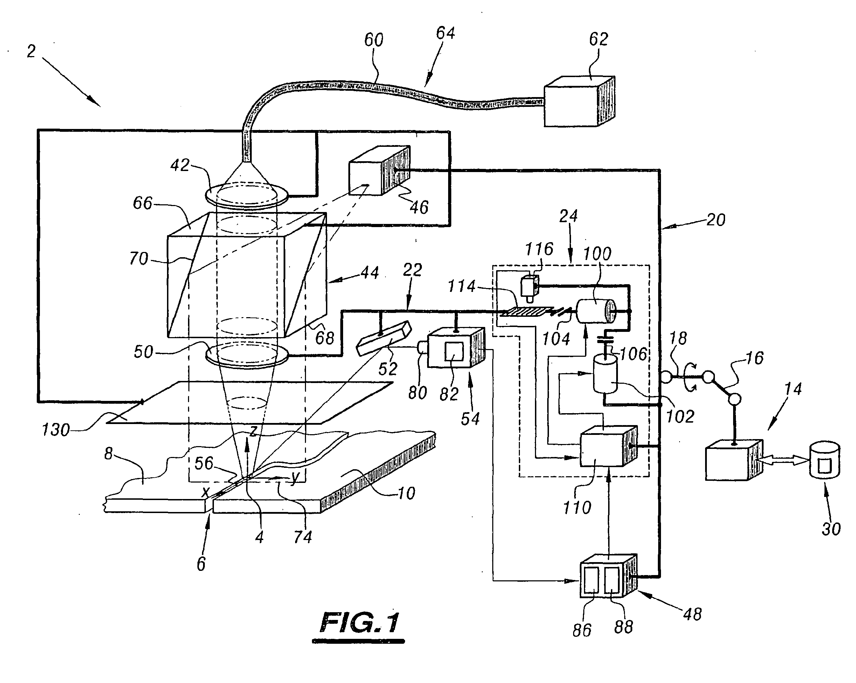

La figure 1 représente un système, désigné par la référence générale 2, pour déplacer un point 4 de focalisation d'un rayonnement laser de puissance destiné à chauffer un joint de soudure 6 entre deux plaques métalliques 8, 10 pour les souder l'une à l'autre le long de ce joint de soudure 6.

Sur la figure 1, seuls les éléments nécessaires à la réalisation et à la compréhension de l'invention sont représentés. Les éléments classiques des systèmes de soudure par laser, tels que, par exemple, des buses de soufflage de gaz inerte pour éviter l'oxydation de la soudure, ou des moyens pour guider le fil d'apport le long du joint de soudure, n'ont pas été représentés de manière à alléger cette illustration.

Ici, le joint de soudure 6 forme la trajectoire à suivre sur la surface de l'objet 8, 10 à traiter. Cette trajectoire à suivre 6 présente des parties courbes avec un faible rayon de courbure, typiquement inférieur à 20 mm, voire même des angles aigus ou obtus.

Un repère orthonormé à trois axes x, y, z est représenté sur le point 4. L'axe x est tangent à la trajectoire 6 au niveau du point de focalisation 4. L'axe y est orthogonal à l'axe x et tangent à la surface de l'objet 8, 10 à traiter au niveau du point de focalisation 4. L'axe z est orthogonal à la surface de l'objet 8, 10 au niveau du point de focalisation 4.

Le système 2 comporte principalement un robot 14 équipé d'un bras articulé 16 à l'extrémité duquel est fixé, par l'intermédiaire d'une articulation pivotante 18, un châssis de support 20. Un châssis mobile 22 ou équipage mobile est relié au châssis de support 20 par l'intermédiaire d'un dispositif de déplacement 24.

Le robot 14 est associé à une mémoire 30 constituant un moyen de stockage d'informations et contenant une trajectoire pré-enregistrée formée par exemple d'une multitude de points. Cette trajectoire pré-enregistrée correspond à la trajectoire que le châssis de support 20 doit suivre pour que le point de focalisation 4 suive approximativement la trajectoire 6. Le robot 14 est capable de convertir cette trajectoire pré-enregistrée en des instructions de déplacement du bras articulé 16 pour que le châssis de support 20, et plus précisément le point de focalisation 4, se déplace approximativement le long de la trajectoire 6. Ces déplacements du bras du robot 14 ne sont pas asservis à la trajectoire 6. Cette trajectoire est, par exemple, enregistrée à l'aide d'un procédé d'apprentissage.

L'articulation 18 est destinée à maintenir en permanence le rayonnement laser formant le point de focalisation 4 colinéaire avec l'axe z lors des déplacements du point de focalisation le long de la trajectoire 6. A cet effet, l'articulation pivotante est, par exemple, uniquement apte à tourner autour d'un axe maintenu parallèle à l'axe y. Ces rotations sont, par exemple, commandées par le robot 14 à partir de la trajectoire pré-enregistrée dans sa mémoire 30. Ici, l'inclinaison du châssis 20 de support est maintenue en permanence constante par rapport à l'axe z et, de préférence, le rayonnement laser de puissance et l'axe z sont colinéaires.

Au châssis de support 20 sont fixés, rigidement et sans aucun degré de liberté, le dispositif de déplacement 24, une lentille de collimation 42, un cube séparateur 44, une source de rayonnement cohérent 46 et une unité 48 d'asservissement du dispositif de déplacement 24.

Le dispositif de déplacement 24 est apte à déplacer, uniquement en translation le long des axes y et z, le châssis mobile 22 sur lequel sont fixés, de façon rigide et sans aucun degré de liberté, une lentille de focalisation 50, un miroir réfléchissant 52 et des moyens 54 de repérage d'un repère lumineux 56 de la position de la trajectoire 6.

La lentille de collimation 42 est propre à transformer un rayonnement laser non collimaté en un rayonnement laser collimaté, c'est-à-dire dont tous les rayons sont parallèles les uns aux autres. A cet effet, la lentille de collimation 42 est associée de façon rigide à une extrémité d'une fibre optique 60 propre à transporter un rayonnement laser de puissance. Ici, l'autre extrémité de cette fibre optique 60 est associée à une source 62 de rayonnement laser de puissance YAG (Ytrium-Aluminium-Garnet Laser) dont la puissance est par exemple comprise entre 2 et 4 kW. Typiquement, la fibre optique laser 60 est logée dans une gaine rigide 64 dont le diamètre est compris entre 4 et 6 mm.

Le cube séparateur 44 est disposé par rapport à la lentille de collimation 42 de manière à recevoir, perpendiculairement à l'une de ses faces 66, le rayonnement laser collimaté, et à transmettre, par une face 68 opposée à la face 66, ce même rayonnement laser collimaté vers la lentille de focalisation 50. Le cube séparateur 44 comporte une lame semi-transparente 70 inclinée à 45° par rapport aux rayons collimatés du rayonnement laser et tournée vers la source de rayonnement cohérent 46. Cette lame semi-transparente 70 laisse passer plus de 98 % du rayonnement laser de puissance et réfléchit la majorité du rayonnement cohérent émis par la source de rayonnement 46 vers la lentille de focalisation 50.

Le rayonnement cohérent émis par la source 46 est ici un rayonnement laser de faible puissance destiné à tracer sur la surface de l'objet 8, 10 un repère lumineux propre à indiquer la position de la trajectoire 6. Ici, cette source 46 est, par exemple, une source de rayonnement laser hélium-néon disposée par rapport à la lame semi-transparente 70 de manière à ce que le rayonnement cohérent, après avoir été réfléchi sur cette lame semi-transparente 70, trace sur la surface de l'objet 8, 10 une ligne 74 parallèle à la l'axe y et en avance de 0,5 à 8 millimètres sur le point de focalisation 4 dans sa direction de déplacement. Cette ligne 74 se déforme au niveau du point d'intersection avec la rainure que forme le joint de soudure 6. Cette déformation crée le repère lumineux 56.

Le miroir 52 est propre à réfléchir la lumière diffusée par le repère lumineux 56 vers les moyens de repérage 54. Ces moyens de repérage 54 comportent ici une optique 80 d'acquisition et de focalisation de l'image et un transducteur 82 propre à convertir l'image acquise en signaux électriques transmis vers l'unité d'asservissement 48. Le transducteur 82 est par exemple un capteur photosensible CCD (Charge-Coupled Device).

L'unité d'asservissement 48 comporte un module 86 d'analyse des signaux électriques transmis par les moyens de repérage 54, propre à établir une valeur d'écart entre la position réelle du point de focalisation 4 et la trajectoire 6. Cette valeur d'écart comporte des composantes horizontales et verticales représentatives de la distance séparant le point de focalisation 4 de la trajectoire 6 respectivement le long de l'axe y et de l'axe z.

L'unité d'asservissement 48 comporte également un module 88 de commande du dispositif de déplacement 24 en fonction de la valeur d'écart établie par le module d'analyse 86. Le module de commande est propre, ici, à transmettre des consignes de déplacement le long des axes y et z au dispositif de déplacement 24.

Dans le mode de réalisation décrit ici, le dispositif de déplacement 24 comporte deux actionneurs électriques linéaires 100 et 102 propres à déplacer le châssis mobile 22 en translation respectivement le long de l'axe y et le long de l'axe z. Chacun des ces actionneurs 100 et 102 est capable de déplacer respectivement un piston 104 parallèlement à l'axe y et un piston 106 parallèlement à l'axe z. La partie fixe de l'actionneur 102 est fixée rigidement et sans aucun degré de liberté au châssis de support 20. La partie fixe de l'actionneur 100 est solidaire du piston 106 de sorte que l'actionneur 100 dans sa totalité est déplacé en translation parallèlement à l'axe z. Le piston 104 est quant à lui rigidement fixé sans aucun degré de liberté au châssis mobile 22. Ainsi, grâce à la combinaison des actionneurs 100 et 102, le châssis mobile 22 et donc la lentille de focalisation 50 est déplaçable en translation parallèlement aux axes y et z.

Ici, la course maximale du piston 104 est de l'ordre de quelques millimètres et, de préférence, inférieure à ± 2 mm de manière à ce que l'axe de la lentille 50 soit décalé au maximum de ± 2 mm par rapport à l'axe de la lentille de collimation 42. En effet, il a été découvert qu'introduire un décalage spatial entre les axes des lentilles de collimation et de focalisation tout en maintenant ces axes parallèles conduit à un décalage correspondant du point de focalisation 4 sans pour autant nuire à la qualité de la soudure réalisée.

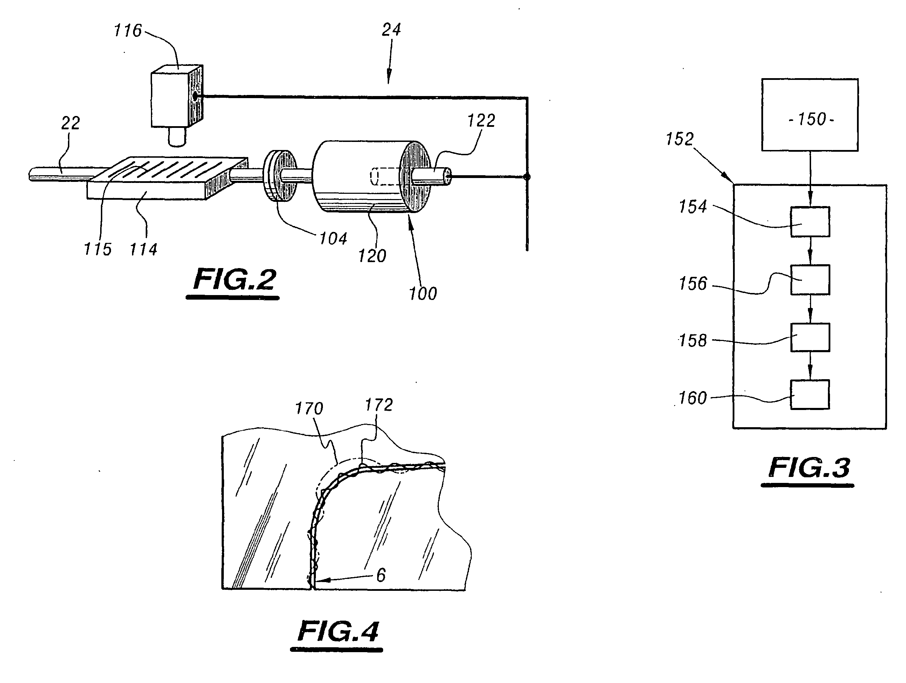

Le dispositif de déplacement 24 comporte aussi une unité d'asservissement 110 propre à recevoir la consigne de commande transmise par l'unité d'asservissement 48 et à asservir la position des pistons 104 et 106 sur cette consigne. A cet effet, les pistons 104 et 106 sont chacun associés à un codeur de position. Les codeurs de position étant les mêmes pour les actionneurs 100 et 102, seul celui de l'actionneur 100 sera décrit ici en détail à l'aide de la figure 2.

Le codeur de position est formé d'une réglette optique 114 portant des graduations 115 et d'un lecteur 116 d'acquisition de ces graduations. Le lecteur 116 est raccordé électriquement à l'unité d'asservissement 110 pour délivrer à cette dernière les informations relatives à la position du piston 104.

De préférence, les actionneurs 100 et 102 sont des actionneurs à bobine acoustique plus connus sous le terme de "Voice Coil". Ici, seul l'actionneur 100 est décrit plus en détail à l'aide de la figure 2.

L'actionneur 100 est formé d'une bobine d'inductance 120 montée déplaçable en translation le long d'un noyau magnétique 122 propre à créer un champ magnétique. Le noyau 122 est rigidement fixé au piston 106. La bobine 120 est solidaire du piston 104 et déplace ce dernier. L'unité d'asservissement 110 commande les déplacements du piston 104 en réglant l'intensité et le sens du courant circulant dans la bobine 120. Cet actionneur 100 est par exemple l'actionneur linéaire LA15-16-020A de la société BEI KIMCO Magnetics Division, 804-A Rancheros Drive, P.O. Box 1626, San Marcos, CA 92069, U.S.A. Ces actionneurs linéaires présentent l'avantage que la partie mobile associée au châssis mobile 22, c'est-à-dire ici la bobine 120, est plus légère que dans le cas des moteurs linéaires classiques. Typiquement, le poids de la bobine 120 varie de 20 à 30 g.

Ici, de manière à alléger le poids du châssis mobile 22, la réglette optique 114 est fixée sur le châssis mobile 22 est le lecteur 116 est solidaire du piston 106.

Finalement, pour protéger la lentille de focalisation 50 des éclaboussures provoquées par la fusion du métal au niveau du point de focalisation 4, un verre de protection 130, solidaire du châssis de support 20, est interposé entre le point de focalisation 4 et la lentille de focalisation 50. Ce verre 130 est transparent aux rayonnements laser.

Le fonctionnement du système 2 va maintenant être décrit en regard de la figure 3.

Initialement, à l'étape 150, un opérateur déplace manuellement le bras 16 du robot 14 et l'articulation pivotante 18 pour que le point de focalisation 4 se déplace en suivant approximativement la trajectoire 6. Lors de cette étape, ces déplacements imposés manuellement par l'opérateur sont enregistrés dans la mémoire 30 et forment la trajectoire pré-enregistrée.

Ensuite, lorsque les plaques 8 et 10 doivent être soudées, le robot 14 est activé à l'étape 152 et commence à reproduire automatiquement les mouvements appris lors de l'étape 150. Ainsi, lors de cette étape 152, le point de focalisation 4 est automatiquement déplacé par le robot 14 approximativement le long de la trajectoire 6.

Lors de cette étape 152, la source de rayonnement cohérent 46 produit en permanence le repère 56 de la trajectoire 6. L'image de ce repère lumineux 56, après avoir été réfléchie sur le miroir 52, est transmise en permanence aux moyens du repérage 54 qui, lors de l'opération 154, convertissent cette image en signaux électriques transmis à l'unité d'asservissement 48.

Le module d'analyse 86 de l'unité 48 établit, à partir de ces signaux électriques lors de l'opération 156, une valeur d'écart entre la position actuelle du point de fusion 4 et la trajectoire 6. Cette valeur d'écart est transmise au module de commande 88 qui la transforme lors de l'opération 158 en une consigne de commande de déplacement de la lentille de focalisation 50 propre à compenser cet écart.

L'unité d'asservissement 110 du dispositif de déplacement 24 asservit en permanence, lors de l'opération 160, la position des pistons 104 et 106 à cette consigne. Dès lors, tout changement de la consigne transmise par l'unité d'asservissement 48 résulte en un déplacement correspondant parallèlement aux axes z et y des pistons 104 et 106 et donc de la lentille de focalisation 50 par l'intermédiaire du châssis mobile 22.

Un déplacement de la lentille de focalisation 50 dans une direction parallèle à l'axe y déplace d'une distance correspondante le long de l'axe y le point de focalisation 4. De façon similaire, un déplacement de la lentille 50 dans une direction parallèle à l'axe z déplace d'une distance correspondante le long de l'axe z le point de focalisation 4. Ainsi, dans le système 2, la lentille de focalisation 50 a pour fonction de déplacer transversalement, c'est-à-dire le long de l'axe y ou verticalement, c'est-à-dire le long de l'axe z le point de focalisation 50 de manière à corriger tout écart transversal par rapport à la trajectoire 6 et à maintenir la distance entre la lentille de focalisation 50 et la surface de l'objet 8, 10 égale à la distance de focalisation de cette lentille.

De plus, lorsque la lentille de focalisation 50 est déplacée, le rayonnement cohérent qui la traverse est également déplacé. Ainsi, la distance séparant le point de focalisation 4 du repère lumineux 56 demeure constante quels que soient les déplacements de la lentille de focalisation 50, et ceci sans qu'aucun circuit de correction de cette distance ne soit nécessaire.

La figure 4 représente des trajectoires obtenues expérimentalement à l'aide du système 2 et à l'aide d'un système conventionnel.

Sur la figure 4, la trajectoire 6 comporte deux portions rectilignes perpendiculaires et raccordées l'une à l'autre par un quart de cercle dont le rayon de courbure est de 20 mm. La trajectoire 170 représentée en traits discontinus correspond à celle obtenue à l'aide d'un système connu dont la source de rayonnement laser présente une puissance de 2,8 kW et dans lequel le point de focalisation se déplace à 4 m/mn. Cette trajectoire 170 s'éloigne de la trajectoire 6 d'environ 0,7 mm juste après le virage reliant les première et seconde portions rectilignes. La ligne en traits pleins représente la trajectoire 172 suivie par le système 2 dans les mêmes conditions. L'écart maximal observé à la sortie du virage reliant les première et seconde portions est, dans ce cas, inférieur à 50 µm, c'est-à-dire que la qualité de la soudure, contrairement aux systèmes connus, n'est affectée en rien par le fait que la trajectoire 6 présente des virages ou des angles serrés.

Grâce à la désolidarisation des lentilles 50 et 42, le poids de la partie mobile formée par le châssis mobile 22, la lentille 50, le miroir 52 et les moyens de repérage 54 est inférieur à 1 kg, et de préférence inférieur à 700 g. Grâce à cette réduction de poids de la partie mobile, les erreurs d'asservissement de celle-ci dues à son énergie cinétique sont considérablement réduites. De plus, il est possible maintenant de corriger beaucoup plus fréquemment les déplacements du point de focalisation. Par exemple, ici, le système corrige plus de 20 fois par seconde et de préférence plus de 50 fois par seconde la trajectoire du point de focalisation.

Dans les systèmes connus, le déplacement du châssis sur lequel sont fixés le dispositif de collimation et le dispositif de focalisation est entravé par la gaine semi-rigide de protection de la fibre optique raccordée au dispositif de focalisation. En effet, cette gaine a typiquement un diamètre d'environ 10 mm et ne peut pas être pliée au-delà d'un seuil de courbure prédéterminé. Dans le système ci-dessus, cette gaine n'entrave plus les déplacements du point de focalisation lors de son asservissement suivant les axes y et z puisque le dispositif de collimation auquel la gaine est raccordée n'est pas déplacé pour réaliser cet asservissement.

Puisque le poids de la partie mobile est faible, il est désormais possible de l'asservir en position non seulement dans un plan horizontal, mais également dans un plan vertical, ce qui, auparavant, n'était pas possible avec des parties mobiles dont le poids était compris entre 7 et 10 kg. Ainsi, le système 2 est apte à déplacer un point de focalisation le long d'une trajectoire se déployant dans les trois dimensions de l'espace. En particulier, le système 2 est propre à suivre des trajectoires présentant des reliefs.

Dans une variante, le cube séparateur est monté pivotant autour d'un axe parallèle à l'axe y de manière à ce que l'inclinaison de la lame semi-transparente soit réglable. Dans cette variante, la distance séparant le repère lumineux 56 du point de focalisation 4 est donc réglable en réglant l'inclinaison de la lame semi-transparente 70.

Le système 2 a été décrit dans le cas particulier de la soudure au laser YAG. En variante, le système 2 est implanté dans un système de découpe de tôle à l'aide d'un faisceau laser ou bien dans un système de raboutage de tôles par fusion de leurs extrémités de contact.

## Revendications

1. Système pour déplacer un point (4) de focalisation d'un rayonnement laser de puissance le long d'une trajectoire (6) présente sur la surface d'un objet à traiter, le rayonnement laser étant apte à chauffer ladite surface pour réaliser des opérations de soudure / de découpage ou de raboutage, ce système comportant :
- un dispositif (42) de collimation du rayonnement laser,
- une lentille (50) de focalisation du rayonnement laser collimaté sur le point de focalisation,
- un dispositif (24) de déplacement en translation de la lentille de focalisation (50) par rapport au dispositif de collimation (42) pour déplacer le point (4) de focalisation du rayonnement laser en déplaçant uniquement la lentille de focalisation (50), et
- un robot équipé d'un bras articulé, le dispositif de déplacement de la lentille de focalisation étant monté à l'extrémité de ce bras articulé,
**caractérisé en ce que** le robot est apte à déplacer l'extrémité de ce bras articulé le long d'une trajectoire préenregistrée correspondant approximativement à la trajectoire présente sur la surface de l'objet à traiter, le robot (14) étant associé à un moyen de stockage d'informations (30) contenant la trajectoire préenregistrée qui correspond approximativement à la trajectoire (6) que doit suivre le point de focalisation (4), et le robot (14) comprenant des moyens pour convertir cette trajectoire préenregistrée en instructions pour déplacer le point de focalisation (4) approximativement le long de la trajectoire (6), et **en ce que** le dispositif (24) de déplacement est apte à déplacer la lentille de focalisation (50) par rapport à la trajectoire préenregistrée de manière à compenser un écart entre la position actuelle du point de focalisation et la trajectoire sur la surface de l'objet lors des déplacements de l'extrémité du bras articulé le long de la trajectoire préenregistrée, le système comportant une source (4b) de rayonnement cohérent propre à tracer sur la surface de l'objet à traiter un repère lumineux indiquant la position de la trajectoire (6) et des moyens de repérage (54) d'un repère lumineux (56) représentant la position de la trajectoire (6) et une unité d'asservissement (48) comprenant un module d'analyse (86) des signaux transmis par les moyens de repérage (54) pour établir une valeur d'écart entre la position réelle du point de focalisation (4) et la trajectoire (6), et un module de commande (88) du dispositif de déplacement (24) en fonction de la valeur d'écart établie par le module d'analyse (86).

2. Système selon la revendication 1, **caractérisé en ce que** le dispositif (24) de déplacement en translation de la lentille de focalisation (50) est apte à déplacer celle-ci perpendiculairement par rapport à un axe du rayonnement laser collimaté.

3. Système selon la revendication 1 ou 2, **caractérisé en ce que** le dispositif (24) de déplacement est apte à introduire un décalage spatial entre des axes du dispositif de collimation et de la lentille de focalisation tout en maintenant ces axes parallèles.

4. Système selon l'une quelconque des revendications précédentes, **caractérisé en ce que** la lentille de focalisation (50) est déplaçable en translation uniquement dans un plan perpendiculaire à la trajectoire (6) présente sur la surface de l'objet à traiter.

5. Système selon la revendication 4, **caractérisé en ce que** la lentille de focalisation (50) est déplaçable en translation dans au moins deux directions différentes du plan perpendiculaire à ladite trajectoire (6).

6. Système selon l'une quelconque des revendications précédentes, **caractérisé en ce que** le dispositif de déplacement (24) comporte au moins un actionneur électrique (100) équipé d'un bobinage (120) monté déplaçable en translation dans un champ magnétique, ce bobinage (120) étant propre à déplacer la lentille de focalisation (50) par rapport au dispositif de collimation.

7. Système selon la revendication 6, **caractérisé en ce qu'**il comporte un repère (114) de position spatiale du bobinage (120) et des moyens (116) d'acquisition de la position de ce repère pour asservir la position du bobinage (120) sur une consigne de position, et **en ce que** le repère de position du bobinage (120) et la lentille de focalisation (50) sont solidaires d'un même châssis (22) déplaçable par le bobinage (120).

8. Système selon l'une quelconque des revendications précédentes, **caractérisé en ce qu'**il comporte un dispositif d'asservissement (48) propre à commander le dispositif (24) de déplacement de la lentille de focalisation (50) pour asservir la position du point de focalisation (4) sur ladite trajectoire.

9. Système selon l'une quelconque des revendications précédentes,
**caractérisé en ce** le rayonnement cohérent traverse à cet effet ladite lentille de focalisation (50) de manière à conserver une relation spatiale constante entre le point de focalisation et le repère lumineux tracé.

10. Système selon l'une quelconque des revendications précédentes, **caractérisé en ce que** le dispositif de collimation (42) est rigidement fixé à l'extrémité du bras articulé (16).

11. Procédé pour déplacer un point de focalisation (4) d'un rayonnement laser de puissance le long d'une trajectoire (6) présente sur la surface d'un objet à traiter, le rayonnement laser étant apte à chauffer ladite surface pour réaliser des opérations de soudure / de découpage ou de raboutage, ce procédé étant destiné à être mis en oeuvre dans un système conforme à l'une quelconque des revendications précédentes,
**caractérisé en ce que** le procédé consiste à déplacer l'extrémité du bras articulé le long d'une trajectoire préenregistrée correspondant approximativement à la trajectoire présente sur la surface de l'objet à traiter, en stockant la trajectoire préenregistrée qui correspond approximativement à la trajectoire (6) que doit suivre le point de focalisation (4), et en convertissant cette trajectoire préenregistrée en instructions pour déplacer le point de focalisation (4) approximativement le long de la trajectoire (6), et à déplacer la lentille de focalisation par rapport à la trajectoire préenregistrée de manière à compenser un écart entre la position actuelle du point de focalisation et la trajectoire sur la surface de l'objet lors des déplacements de l'extrémité du bras articulé le long de la trajectoire préenregistrée, en repérant un repère lumineux (56) de la position de la trajectoire (6), en analysant les signaux repérés pour établir une valeur d'écart entre la position réelle du point de focalisation (4) et la trajectoire (6), et en commandant le dispositif de déplacement (24) en fonction de la valeur d'écart établie.

12. Procédé selon la revendication 11, **caractérisé en ce qu'**il consiste à déplacer la lentille de focalisation (50) uniquement en translation dans un plan perpendiculaire à la trajectoire présente sur la surface de l'objet à traiter.

13. Procédé selon la revendication 12, **caractérisé en ce qu'**il consiste à déplacer la lentille de focalisation (50) en translation dans au moins deux directions différentes du plan perpendiculaire à ladite trajectoire.

14. Procédé selon l'une quelconque des revendications 11 à 13, **caractérisé en ce qu'**il asservit (en 152) les déplacements de la lentille de focalisation (50) sur ladite trajectoire (6).

## Claims

1. System for displacing a focal point (4) of power laser radiation along a trajectory (6) existing on the surface of an object to be processed, the laser radiation being adapted to heat the said surface in order to carry out welding/cutting or joining operations, this system comprising:
- a device (42) for collimating the laser radiation,
- a lens (50) for focusing the collimated laser radiation onto the focal point,
- a device (24) for displacing the focusing lens (50) in translation with respect to the collimating device (42) in order to displace the focal point (4) of the laser radiation by displacing only the focusing lens (50), and
- a robot equipped with an articulated arm, the device for displacing the focusing lens being mounted at the end of this articulated arm,
**characterised in that** the robot is adapted to displace the end of this articulated arm along a prerecorded trajectory corresponding approximately to the trajectory existing on the surface of the object to be processed, the robot (14) being associated with an information storage means (30) containing Lhe prerecorded trajectory that corresponds approximately to the trajectory (6) which the focal point (4) is intended to follow, and the robot (14) comprising means for converting this prerecorded trajectory into instructions for displacing the focal point (4) approximately along the trajectory (6), and **in that** the displacing device (24) is adapted to displace the focusing lens (50) with respect to the prerecorded trajectory so as to compensate for a discrepancy between the current position of the focal point and the trajectory on the surface of the object during displacements of the end of the articulated arm along the prerecorded trajectory, the system comprising a coherent radiation source (46) capable of plotting on the surface of the object to be processed a luminous marker indicating the position of the trajectory (6) and means (54) for detecting the luminous marker (56) representing the position of the trajectory (6) and a slaving unit (48) comprising a module (86) for analysing the signals transmitted by the locating means (54) in order to establish a value of the discrepancy between the real position of the focal point (4) and the trajectory (6), and a module (88) for controlling the displacing device (24) as a function of the discrepancy value established by the analysis module (86).

2. System according to Claim 1, **characterised in that** the device (24) for displacing the focusing lens (50) in translation is adapted to displace it perpendicularly with respect to an axis of the collimated laser radiation.

3. System according to Claim 1 or 2, **characterised in that** the displacing device (24) is adapted to introduce a spatial offset between axes of the collimating device and of the focusing lens, while keeping these axes parallel.

4. System according to any one of the preceding claims, **characterised in that** the focusing lens (50) is displaceable in translation only in a plane perpendicular to the trajectory (6) existing on the surface of the object to be processed.

5. System according to Claim 4, **characterised in that** the focusing lens (50) is displaceable in translation in at least two different directions of the plane perpendicular to the said trajectory (6).

6. System according to any one of the preceding claims, **characterised in that** the displacing device (24) comprises at least one electrical actuator (100) equipped with a winding (120) mounted displaceably in translation in a magnetic field, this winding (120) being capable of displacing the focusing lens (50) with respect to the collimating device.

7. System according to Claim 6, **characterised in that** it comprises a marker (114) for the spatial position of the winding (120) and means (116) for acquiring the position of this marker in order to slave the position of the winding (120) onto a setpoint position, and **in that** the position marker of the winding (120) and the focusing lens (50) are securely fixed to the same chassis (22) displaceable by the winding (120).

8. System according to any one of the preceding claims, **characterised in that** it comprises a slaving device (48) capable of controlling the device (24) for displacing the focusing lens (50) in order to slave the position of the focal point (4) onto the said trajectory.

9. System according to any one of the preceding claims, **characterised in that** to this end the coherent radiation passes through the said focusing lens (50) so as to maintain a constant spatial relationship between the focal point and the plotted luminous marker.

10. System according to any one of the preceding claims, **characterised in that** the collimating device (42) is fixed rigidly to the end of the articulated arm (16).

11. Method for displacing a focal point (4) of power laser radiation along a trajectory (6) existing on the surface of an object to be processed, the laser radiation being adapted to heat the said surface in order to carry out welding/cutting or joining operations, this method being intended to be carried out in a system according to any one of the preceding claims,
**characterised in that** the method consists in displacing the end of the articulated arm along a prerecorded trajectory corresponding approximately to the trajectory existing on the surface of the object to be processed, by storing the prerecorded trajectory that corresponds approximately to the trajectory (6) which the focal point (4) is intended to follow, and by converting this prerecorded trajectory into instructions for displacing the focal point (4) approximately along the trajectory (6), and in displacing the focusing lens (50) with respect to the prerecorded trajectory so as to compensate for a discrepancy between the current position of the focal point and the trajectory on the surface of the object during displacements of the end of the articulated arm along the prerecorded trajectory, by detecting the luminous marker (56) of the position of the trajectory (6), by analysing the detected signals in order to establish a value of the discrepancy between the real position of the focal point (4) and the trajectory (6), and by controlling the displacing device (24) as a function of the discrepancy value which is established.

12. Method according to Claim 11, **characterised in that** it consists in displacing the focusing lens (50) only in translation in a plane perpendicular to the trajectory existing on the surface of the object to be processed.

13. Method according to Claim 12, **characterised in that** it consists in displacing the focusing lens (50) in translation in at least two different directions of the plane perpendicular to the said trajectory.

14. Method according to any one of Claims 11 to 13, **characterised in that** it slaves (at 152) the displacements of the focusing lens (50) onto the said trajectory (6).

## Patentansprüche

1. System zum Bewegen eines Fokussierungspunkts (4) einer Leistungslaserstrahlung längs einer Bahn (6), die auf der Oberfläche eines zu bearbeitenden Objekts verläuft, wobei die Laserstrahlung in der Lage ist, diese Oberfläche zur Durchführung von Schweiß-/ Schneid- oder Stumpfschweißarbeitsgängen zu erhitzen, wobei dieses System umfasst:
- eine Vorrichtung (42) zur Kollimation der Laserstrahlung,
- eine Linse (50) zur Fokussierung der kollimatierten Laserstrahlung auf den Fokussierungspunkt,
- eine Vorrichtung (24) zur Translationsbewegung der Fokussierungslinse (50) bezüglich der Kollimationsvorrichtung (42) zum Bewegen des Fokussierungspunkts (4) der Laserstrahlung, indem nur die Fokussierungslinse (50) bewegt wird, und
- einen mit einem Gelenkarm ausgerüsteten Robot, wobei die Vorrichtung zur Bewegung der Fokussierungslinse am Ende dieses Gelenkarms montiert ist,
**dadurch gekennzeichnet, dass** der Robot in der Lage ist, das Ende dieses Gelenkarms längs einer voraufgezeichneten Bahn zu bewegen, die annähernd der auf der Oberfläche des zu bearbeitenden Objekts verlaufenden Bahn entspricht, wobei der Robot (14) einem Datenspeichermittel (30) zugeordnet ist, das die voraufgezeichnete Bahn enthält, die annähernd der Bahn (6) entspricht, der der Fokussierungspunkt (4) folgen soll, und der Robot (14) Mittel zum Umwandeln dieser voraufgezeichneten Bahn in Befehle zum Bewegen des Fokussierungspunkts (4) annähernd längs der Bahn (6) umfasst, und dass die Bewegungsvorrichtung (24) in der Lage ist, die Fokussierungslinse (50) bezüglich der voraufgezeichneten Bahn so zu bewegen, dass eine Abweichung zwischen der aktuellen Position des Fokussierungspunkts und der Bahn auf der Oberfläche des Objekts bei Bewegungen des Endes des Gelenkarms längs der voraufgezeichneten Bahn kompensiert wird, wobei das System eine Quelle (46) für kohärente Strahlung umfasst, die auf der Oberfläche des zu bearbeitenden Objekts ein Lichtmarke zeichnen kann, die die Position der Bahn (6) angibt, sowie Mittel (54) zur Ortung der Lichtmarke (56), die die Position der Bahn (6) darstellt, und eine Nachführungseinheit (48), die ein Modul (86) zur Analyse der von den Ortungsmitteln (54) übertragenen Signale umfasst, um einen Abweichungswert zwischen der tatsächlichen Position des Fokussierungspunkts (4) und der Bahn(6) zu ermitteln, und ein Modul (88) zur Steuerung der Bewegungsvorrichtung (24) in Abhängigkeit von dem von dem Analysemodul (86) ermittelten Abweichungswert.

2. System nach Anspruch 1, **dadurch gekennzeichnet, dass** die Vorrichtung (24) zur Translationsbewegung der Fokussierungslinse (50) in der Lage ist, diese senkrecht zu einer Achse der kollimatierten Laserstrahlung zu bewegen.

3. System nach Anspruch 1 oder 2, **dadurch gekennzeichnet, dass** die Bewegungsvorrichtung (24) in der Lage ist, eine räumliche Verschiebung zwischen Achsen der Kollimationsvorrichtung und der Fokussierungslinse einzuführen, indem diese Achsen parallel gehalten werden.

4. System nach einem der vorhergehenden Ansprüche, **dadurch gekennzeichnet, dass** die Fokussierungslinse (50) nur in einer Ebene translationsbeweglich ist, die zu der auf der Oberfläche des zu bearbeitenden Objekts verlaufenden Bahn (6) senkrecht ist.

5. System nach Anspruch 4, **dadurch gekennzeichnet, dass** die Fokussierungslinse (50) in mindestens zwei verschiedenen Richtungen der zu dieser Bahn (6) senkrechten Ebene translationsbeweglich ist.

6. System nach einem der vorhergehenden Ansprüche, **dadurch gekennzeichnet, dass** die Bewegungsvorrichtung (24) mindestens ein elektrisches Stellglied (100) umfasst, das mit einer wicklung (120) ausgerüstet ist, die in einem Magnetfeld translationsbeweglich montiert ist, wobei diese Wicklung (120) in der Lage ist, die Fokussierungslinse (50) bezüglich der Kollimationsvorrichtung zu bewegen.

7. System nach Anspruch 6, **dadurch gekennzeichnet, dass** es eine Marke (114) für die räumliche Position der Wicklung (120) und Mittel (116) zum Erfassen der Position dieser Marke umfasst, um die Position der Wicklung (120) einem Positionssollwert nachzuführen, und dass die Positionsmarke der Wicklung (120) und die Fokussierungslinse (50) mit ein und demselben, durch die Wicklung (120) bewegbaren Gestell (22) fest verbunden sind.

8. System nach einem der vorhergehenden Ansprüche, **dadurch gekennzeichnet, dass** es eine Nachführungsvorrichtung (48) umfasst, die in der Lage ist, die Vorrichtung (24) zur Bewegung der Fokussierungslinse (50) zu steuern, um die Position des Fokussierungspunkts (4) dieser Bahn nachzuführen.

9. System nach einem der vorhergehenden Ansprüche, **dadurch gekennzeichnet, dass** die kohärente Strahlung zu diesem Zweck die Fokussierungslinse (50) so durchquert, dass eine konstante räumliche Beziehung zwischen dem Fokussierungspunkt und der gezeichneten Lichtmarke beibehalten wird.

10. System nach einem der vorhergehenden Ansprüche, **dadurch gekennzeichnet, dass** die Kollimationsvorrichtung (42) am Ende des Gelenkarms (16) starr befestigt ist.

11. Verfahren zum Bewegen eines Fokussierungspunkts (4) einer Leistungslaserstrahlung längs einer Bahn (6), die auf der Oberfläche eines zu bearbeitenden Objekts verläuft, wobei die Laserstrahlung in der Lage ist, diese Oberfläche zur Durchführung von Schweiß-/ Schneid- oder Stumpfschweißarbeitsgängen zu erhitzen, wobei dieses Verfahren dazu bestimmt ist, in einem System gemäß einem der vorhergehenden Ansprüche durchgeführt zu werden,
**dadurch gekennzeichnet, dass** das Verfahren darin besteht, dass das Ende des Gelenkarms längs einer voraufgezeichneten Bahn bewegt wird, die annähernd der auf der Oberfläche des zu bearbeitenden Objekts verlaufenden Bahn entspricht, indem die voraufgezeichnete Bahn gespeichert wird, die annähernd der Bahn (6) entspricht, der der Fokussierungspunkt (4) folgen soll, und indem diese voraufgezeichnete Bahn in Befehle zum Bewegen des Fokussierungspunkts (4) annähernd längs der Bahn (6) umgewandelt wird und indem die Fokussierungslinse bezüglich der voraufgezeichneten Bahn so beweg wird, dass eine Abweichung zwischen der aktuellen Position des Fokussierungspunkts und der Bahn auf der Oberfläche des Objekts bei Bewegungen des Endes des Gelenkarms längs der voraufgezeichneten Bahn kompensiert wird, indem eine Lichtmarke (56) der Position der Bahn (6) geortet wird, indem die georteten Signale analysiert werden, um einen Abweichungswert zwischen der tatsächlichen Position des Fokussierungspunkts (4) und der Bahn (6) zu ermitteln, und indem die Bewegungsvorrichtung (24) in Abhängigkeit von dem ermittelten Abweichungswert gesteuert wird.

12. Verfahren nach Anspruch 11, **dadurch gekennzeichnet, dass** es darin besteht, dass die Fokussierungslinse (50) nur in Translation in einer Ebene bewegt wird, die zu der auf der Oberfläche des zu bearbeitenden Objekts verlaufenden Bahn senkrecht ist.

13. Verfahren nach Anspruch 12, **dadurch gekennzeichnet, dass** es darin besteht, dass die Fokussierungslinse (50) in mindestens zwei verschiedenen Richtungen der zu der Bahn senkrechten Ebene in Translation bewegt wird.

14. Verfahren nach einem der Ansprüche 11 bis 13, **dadurch gekennzeichnet, dass** es (in 152) die Bewegungen der Fokussierungslinse (50) der Bahn (6) nachführt.
